# EUROPEAN PATENT APPLICATION

(11) **EP 4 344 141 A1**
(43) Date of publication of application: **27.03.2024**
(21) Application number: 22804038.2
(22) Date of filing: 19.05.2022
(51) Int. Cl.: H04L 25/02

(54) **DELAYED DOPPLER DOMAIN CHANNEL INFORMATION FEEDBACK METHOD AND APPARATUS, AND ELECTRONIC DEVICE**

(30) Priority: 21.05.2021 CN 202110560591
(71) Applicant: Vivo Mobile Communication Co., Ltd., Dongguan, Guangdong 523863 (CN)
(72) Inventor: SUN, Bule, Dongguan, Guangdong 523863 (CN); JIANG, Dajie, Dongguan, Guangdong 523863 (CN); YUAN, Pu, Dongguan, Guangdong 523863 (CN)
(74) Representative: Conti, Marco
(86) International application number: PCT/CN2022/093866
(87) International publication number: WO 2022/242718

(57) **Abstract**

This application discloses a method and an apparatus for feeding back channel information of a delay-Doppler domain, and an electronic device, and relates to the field of mobile communications. The method for feeding back channel information of a delay-Doppler domain in embodiments of this application includes: a first device sends target feedback information to a second device, where the target feedback information is associated with target channel information, the target channel information is all or part of channel information of a delay-Doppler domain obtained by the first device performing channel estimation on a target signal, and the target signal is a signal sent by the second device or a third device to the first device.

## Description

### CROSS-REFERENCE TO RELATED APPLICATIONS

The present invention claims priority to Chinese Patent Application No. 202110560591.8, filed with the Chinese Patent Office on May 21, 2021, and entitled "a method and an apparatus for feeding back channel information of a delay-Doppler domain, and an electronic device", which is incorporated herein by reference in its entirety.

### TECHNICAL FIELD

This application relates to the technical field of mobile communications, and in particular to a method and an apparatus for feeding back channel information of a delay-Doppler domain, and an electronic device.

### BACKGROUND

In a communication system, if targeted preprocessing, such as precoding, link adaptation, and scheduling, is to be performed on a channel at a transmit end, there is a need to obtain channel estimation from the transmit end (end A) to a receive end (end B). If the channel has reciprocity, for example, a time division duplex (Time Division Duplex, TDD) channel, a reference signal may be sent by the end B, the channel from the end B to the end A may be estimated at the end A, and channel estimation from the end A to the end B may be obtained through channel reciprocity. If the channel does not have reciprocity, for example, a frequency division duplex (Frequency Division Duplex, FDD) channel, a reference signal needs to be sent by the end A, and the end B estimates the channel from the end A to the end B and then feeds same back to the end A. The latter feedback-based approach also applies to a channel having reciprocity. Different channel information may be obtained through channel estimation based on different modulation technologies, and the channel information may be channel information of a time-frequency domain based on orthogonal frequency division multiplex (Orthogonal frequency division multiplex, OFDM) modulation, or may be channel information of a delay-Doppler domain based on orthogonal time frequency space (Orthogonal Time Frequency Space, OTFS) modulation, and is used for indicating delay and Doppler characteristics of a channel.

Current transmission schemes are all oriented to time-frequency domain channels of OFDM modulation when feeding back channel information. Channel information of a delay-Doppler domain has its own unique characteristics, a signal passing channel mode or an input-output relationship of transmit and receive ends in an OTFS is also different from a time-frequency domain signal passing channel mode, and balance between feedback overhead and feedback accuracy cannot be achieved when feeding back the channel information of the delay-Doppler domain.

### SUMMARY

Embodiments of this application provide a method and an apparatus for feeding back channel information of a delay-Doppler domain, and an electronic device, and can solve the problem that balance between feedback overhead and feedback accuracy cannot be achieved when feeding back channel information of a delay-Doppler domain.

According to a first aspect, provided is a method for feeding back channel information of a delay-Doppler domain, applied to a first device, and including:
sending, by a first device, target feedback information to a second device, where
the target feedback information is associated with target channel information, the target channel information is all or part of channel information of the delay-Doppler domain obtained by the first device performing channel estimation on a target signal, and the target signal is a signal sent by the second device or a third device to the first device.

According to a second aspect, provided is an apparatus for feeding back channel information of a delay-Doppler domain, including:
a measurement module configured to perform channel estimation on a target signal to obtain target channel information of a delay-Doppler domain; and
a feedback module configured to send target feedback information to a second device, where
the target feedback information is associated with the target channel information, and the target signal is a signal sent by the second device or a third device to a first device.

According to a third aspect, provided is a terminal, where the terminal includes a processor, a memory, and a program or instructions stored in the memory and runnable on the processor, and when the program or the instructions is/are executed by the processor, steps of the method according to the first aspect are implemented.

According to a fourth aspect, provided is a network side device, where the network side device includes a processor, a memory, and a program or instructions stored in the memory and runnable on the processor, and when the program or the instructions is/are executed by the processor, steps of the method according to the first aspect are implemented.

According to a fifth aspect, provided is a readable storage medium, where the readable storage medium stores a program or instructions, and when the program or the instructions is/are executed by a processor, steps of the method according to the first aspect are implemented.

According to a sixth aspect, provided is a chip, where the chip includes a processor and a communication interface, the communication interface is coupled to the processor, and the processor is configured to run a program or instructions to implement the method according to the first aspect.

According to a seventh aspect, provided is a computer program/program product, where the computer program/program product is stored in a non-transitory storage medium, and the program/program product is executed by at least one processor to implement steps of the method for feeding back channel information of a delay-Doppler domain according to the first aspect.

In embodiments of this application, target feedback information is sent to a second device, where the target feedback information is associated with target channel information, the target channel information is all or part of channel information of a delay-Doppler domain obtained by performing channel estimation by a first device on a target signal, and the target signal is a signal sent by the second device or a third device to the first device. Therefore, the channel information of the delay-Doppler domain may be accurately sent, and balance between feedback overhead and feedback accuracy may be achieved based on the methods of determining the target channel information and the target feedback information.

### RIEF DESCRIPTION OF THE DRAWINGS

FIG. 1 is a schematic structural diagram of a wireless communication system to which embodiments of this application may be applied;
FIG. 2 is a schematic flowchart of a method for feeding back channel information of a delay-Doppler domain according to embodiments of this application;
FIG. 3 is a schematic diagram of channel information of a delay-Doppler domain according to embodiments of this application;
FIG. 4 is a schematic flowchart of another method for feeding back channel information of a delay-Doppler domain according to embodiments of this application;
FIG. 5 is a schematic flowchart of another method for feeding back channel information of a delay-Doppler domain according to embodiments of this application;
FIG. 6 is a schematic flowchart of another method for feeding back channel information of a delay-Doppler domain according to embodiments of this application;
FIG. 7 is a schematic flowchart of another method for feeding back channel information of a delay-Doppler domain according to embodiments of this application;
FIG. 8 is a schematic structural diagram of an apparatus for feeding back channel information of a delay-Doppler domain according to embodiments of this application;
FIG. 9 is a schematic structural diagram of a communication device according to embodiments of this application;
FIG. 10 is a schematic structural diagram of a terminal implementing embodiments of this application;
FIG. 11 is a schematic structural diagram of a network side device implementing embodiments of this application.

### DETAILED DESCRIPTION

The technical solutions in embodiments of this application are clearly described in the following with reference to the accompanying drawings in the embodiments of this application. Apparently, the described embodiments are merely some rather than all of the embodiments of this application. All other embodiments obtained by a person skilled in the art based on the embodiments of this application fall within the protection scope of this application.

Terms "first", "second", and the like in the specification and claims of this application are used to distinguish similar objects, but are not used to describe a specific sequence or order. It should be understood that the terms so used are interchangeable under appropriate circumstances such that the embodiments of this application are capable of operation in sequences other than those illustrated or described herein. Moreover, objects distinguished by "first" and "second" are usually of one type, and the quantity of objects is not limited. For example, there may be one or more first objects. In addition, "and/or" used in this specification and the claims represents at least one of the connected objects, and the character "/" generally means that the associated objects are an "or" relationship.

It is worth pointing out that the technology described in the embodiments of this application is not limited to a long term evolution (Long Term Evolution, LTE)/LTE-Advanced (LTE-A) system, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technology may be used for the above-mentioned systems and radio technologies, or may be used for other systems and radio technologies. The following descriptions describe a new radio (New Radio, NR) system for example purposes, and NR terminology is used in most of the following descriptions, but these technologies may also be applied to applications other than NR system applications, such as a 6th generation (6th Generation, 6G) communication system.

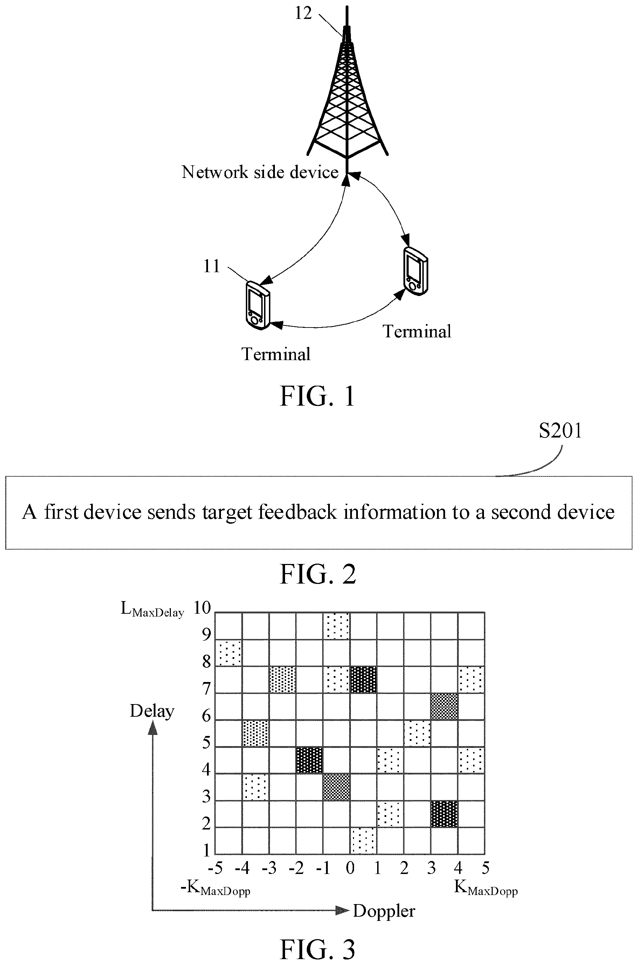

FIG. 1 is a schematic structural diagram of a wireless communication system to which embodiments of this application may be applied. The wireless communication system includes a first device 11 and a second device 12. The first device and the second device may be two terminals, or may be a terminal and a network side device. The terminal may alternatively be referred to as a terminal device or user equipment (User Equipment, UE). The terminal may be a terminal side device such as a mobile phone, a tablet personal computer (Tablet Personal Computer), a laptop computer (Laptop Computer) which is alternatively known as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicular user equipment (VUE), and pedestrian user equipment (PUE). The wearable device includes: a smart watch, bracelet, earphones, glasses, and the like. It should be noted that the specific type of the terminal is not limited in embodiments of this application. The network side device may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (Evolved Node-B, eNB), a home NodeB, a home evolved NodeB, a wireless local area network (Wireless Local Area Network, WLAN) access point, a WiFi node, a transmission reception point (Transmission Reception Point, TRP), or any other suitable term in the field. As long as a same technical effect is achieved, the base station is not limited to a specific technical term. It should be noted that in embodiments of this application, only a base station in an NR system is taken as an example, but the specific type of the base station is not limited.

The method for feeding back channel information of a delay-Doppler domain according to embodiments of this application will be described in detail below through some embodiments and application scenarios thereof with reference to the accompanying drawings.

FIG. 2 is a schematic flowchart of a method for feeding back channel information of a delay-Doppler domain according to embodiments of this application. As shown in FIG. 2, the method is executed by a first device, which may be a terminal or a network side device. In other words, the method may be executed by software or hardware installed on a terminal or a network side device. The method may include the following step.

Step S201: The first device sends target feedback information to a second device.

The target feedback information is associated with target channel information, the target channel information is all or part of channel information of a delay-Doppler domain obtained by the first device performing channel estimation on a target signal, and the target signal is a signal sent by the second device or a third device to the first device.

The first device may obtain the channel information of the delay-Doppler domain between the first device and the second device by performing a preset channel estimation algorithm. Specifically, the channel information may be obtained by performing delay-Doppler analysis on the target signal sent by the second device or the third device. The target signal may include a reference signal or a synchronization signal. The reference signal may specifically include at least one of the following:
a cell reference signal (Cell Reference Signal, CRS);
a channel state information reference signal (Channel State Information Reference Signal, CSI-RS);
a demodulation reference signal (Demodulation Reference Signal, DMRS);
a position reference signal (Position Reference Signal, PRS);
a phase-tracking reference signal (Phase-tracking reference signal, PTRS); and
a tracking reference signal (Tracking Reference Signal, TRS).

There are many methods for performing channel estimation on the target signal, and channel estimation based on OTFS modulation may be used.

The first device obtains the channel information of the delay-Doppler domain through channel estimation, and as shown in FIG. 3, the channel information may be mapped to a two-dimensional delay-Doppler plane. Value ranges of delay values and Doppler values may be determined based on a transmission frequency between the first device and the second device, a maximum relative speed between the first device and the second device, and a maximum distance between the first device and the second device, so that a boundary of the delay-Doppler domain may be determined based on the value ranges of the delay values and the Doppler values. Moreover, the delay-Doppler domain is represented on the two-dimensional delay-Doppler grid. Each grid cell represents a delay-Doppler pair, and a complex gain on the grid cell represents a complex gain on a transmission path corresponding to the delay-Doppler pair. Delay domain resolution in the delay-Doppler domain is ϕ seconds, in other words, each grid cell in a delay domain represents ϕ seconds, and Doppler domain resolution is ω hertz, in other words, each grid cell in a Doppler domain represents ω hertz. A grid of *L_{MaxDelay}* × (2*K_{MaxDopp}* + 1) dimensions may be used for representing the channel information in the above given scenario. *L_{MaxDelay}* represents a grid cell number corresponding to a maximum delay value considered, and *K_{MaxDopp}* represents a grid cell number corresponding to a maximum Doppler value. Since the Doppler value may be positive or negative, a total of (2*K_{MaxDopp}* + 1) grid cells are obtained by division in the Doppler domain direction. The physical meaning behind is that a delay and Doppler effect of a signal is actually a linear superposition effect of a series of echoes having different time and frequency offsets after the signal passes through a multipath channel. In this sense, delay-Doppler analysis and time-frequency domain analysis may be obtained by mutual conversion of inverse symplectic fast Fourier transform (Inverse Sympletic Fast Fourier Transform, ISFFT) and symplectic fast Fourier transform (Sympletic Fast Fourier Transform, SFFT).

The first device extracts target channel information that needs to be sent to the second device by analyzing the channel information of the delay-Doppler domain, and sends same to the second device in the form of target feedback information. The second device analyzes the target feedback information to obtain the target channel information.

Thus, embodiments of this application provide a method for feeding back channel information of a delay-Doppler domain. Target feedback information is sent to a second device, where the target feedback information is associated with target channel information, the target channel information is all or part of channel information of a delay-Doppler domain obtained by a first device performing channel estimation on a target signal, and the target signal is a signal sent by the second device or a third device to the first device. Therefore, the channel information of the delay-Doppler domain may be accurately sent, and balance between feedback overhead and feedback accuracy may be achieved based on the methods of determining the target channel information and the target feedback information.

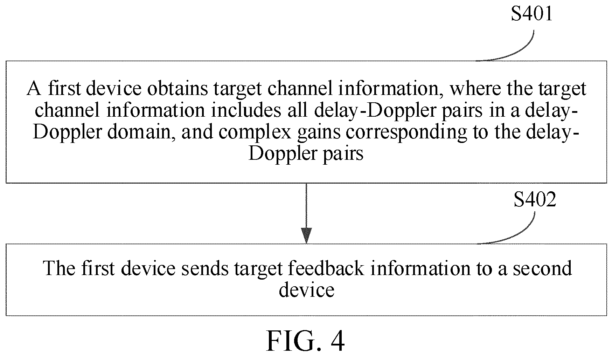

FIG. 4 is a schematic flowchart of another method for feeding back channel information of a delay-Doppler domain according to embodiments of this application. As shown in FIG. 4, the method is executed by a first device, which may be a terminal or a network side device. In other words, the method may be executed by software or hardware installed on a terminal or a network side device. The method may include the following steps.

Step S401: The first device obtains target channel information, where the target channel information includes all delay-Doppler pairs in the delay-Doppler domain, and complex gains corresponding to the delay-Doppler pairs. Each delay-Doppler pair is determined by a pair of delay value and Doppler value, and is used for indicating a region indicated by the pair of delay value and Doppler value in the delay-Doppler domain.

In embodiments of this application, channel information of the delay-Doppler domain obtained by the first device through channel estimation is all used as the target channel information. Taking channel information of a delay-Doppler domain shown in FIG. 3 as an example, the first device uses all channel information corresponding to the grid of *L_{MaxDelay}* × (2*K_{MaxDopp}* + 1) dimensions as target channel information, and the target channel information includes delay-Doppler pairs corresponding to all grid cells, and complex gains corresponding to the delay-Doppler pairs.

Step S402: The first device sends target feedback information to a second device.

The target feedback information is associated with the target channel information, the target channel information is all or part of channel information of the delay-Doppler domain obtained by the first device performing channel estimation on a target signal, and the target signal is a signal sent by the second device or a third device to the first device.

Before Step S402, there are many feedback approaches for the first device to determine the target feedback information to be sent to the second device based on the target channel information, including at least one of the following:
directly quantizing the target channel information as the target feedback information; and
according to the target channel information, determining the target feedback information based on a target codebook selected from a codebook set.

In one implementation, the channel information corresponding to the delay-Doppler pairs in the target channel information is directly quantized as the target feedback information. To be specific, position information of the delay-Doppler pairs in the delay-Doppler domain and the complex gains corresponding to the delay-Doppler pairs are directly quantized as the target feedback information. The target feedback information is sent to the second device. The second device recovers the channel information of the delay-Doppler domain based on the received target feedback information obtained by direct quantization.

It can be learned that through the direct quantization feedback approach, the channel information may be most comprehensively fed back and the second device may achieve high feedback accuracy when recovering the channel information. However, this feedback approach requires high feedback overhead.

In one implementation, floating point number precision of the complex gain corresponding to each delay-Doppler pair in the target feedback information is determined by a second parameter. The second parameter is determined in at least one of the following ways:
determining by a protocol; and
determining by first signaling exchanged between the first device and the second device.

In another implementation, according to the channel information of the delay-Doppler domain, the target feedback information is determined based on a target codebook selected from a codebook set. A codebook set is preset, and the codebook set may include a plurality of codebooks. The first device selects a target codebook from the codebook set based on the obtained target channel information of the delay-Doppler domain.

In one implementation, the first device may select a codebook most similar to the target channel information from the codebook set, and determine the target feedback information based on the most similar codebook. The target feedback information may be an index of the most similar codebook, and the first device sends the index of the most similar codebook to the second device. The second device searches for the corresponding codebook from the codebook set based on the received index, and then recovers the target channel information based on the found codebook. In other words, the found codebook may be used as the target channel information, and further as the channel information of the delay-Doppler domain.

In another implementation, in a case that the target channel information is represented by a weighted sum of a plurality of codebooks in the codebook set, the target feedback information is determined based on the weighted sum of the plurality of codebooks. The first device selects a plurality of codebooks from the codebook set, and represents the target channel information as a weighted sum of the plurality of codebooks. In one implementation, the first device may use an index and a corresponding weighted value of each of the plurality of codebooks as the target feedback information based on the weighted sum of the plurality of codebooks, and send the indexes of the plurality of codebooks and the weighted values corresponding to the codebooks to the second device. The second device searches for the plurality of corresponding codebooks from the codebook set based on the received indexes, then recovers the target channel information based on the weighted values corresponding to the codebooks, and then obtains the channel information of the delay-Doppler domain.

In one implementation, floating point number precision of the weighted value is determined by a fourth parameter, and the fourth parameter is determined in at least one of the following ways:
determining by a protocol; and
determining by first signaling exchanged between the first device and the second device.

In one implementation, the first signaling exchanged between the first device and the second device includes at least one of the following:
radio resource control (Radio Resource Control, RRC) signaling;
layer 1 signaling of a physical downlink control channel (Physical downlink control channel, PDCCH);
information of a physical downlink shared channel (Physical downlink shared channel, PDSCH);
signaling of a medium access control control element (Medium Access Control Control Element, MAC CE);
a system information block (System Information Block, SIB);
layer 1 signaling of a physical uplink control channel (Physical uplink control channel, PUCCH);
MSG 1 information of a physical random access channel (Physical Random Access Channel, PRACH);
MSG 3 information of the physical random access channel;
MSG A information of the physical random access channel;
information of a physical uplink shared channel;
Xn interface signaling;
PC5 interface signaling; and
sidelink interface signaling.

In one implementation, the first device may adaptively adjust a first parameter and/or the fourth parameter based on a transmission environment condition and a transmission requirement, which may be specifically implemented by transmitting the first signaling. a process of the adaptive adjustment is triggered by the first device or the second device.

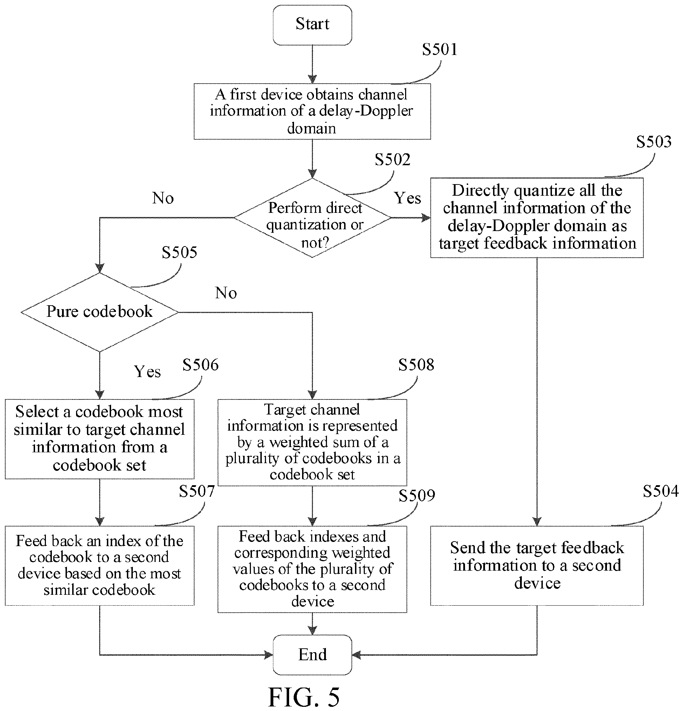

In one implementation, FIG. 5 is a schematic flowchart of another method for feeding back channel information of a delay-Doppler domain according to embodiments of this application. As shown in FIG. 5, the method includes the following steps.

Step S501: A first device obtains channel information of a delay-Doppler domain.

Step S502: Determine whether to directly quantize the channel information of the delay-Doppler domain; if yes, perform Step S503; or if not, perform Step S505 based on a codebook set.

Step S503: Directly quantize all the channel information of the delay-Doppler domain as target feedback information.

Step S504: Send the target feedback information to a second device.

Step S505: Determine whether to use a pure codebook approach; if yes, perform step S506; or if not, perform step S508.

Step S506: Select a codebook most similar to target channel information from the codebook set.

Step S507: Feed back an index of the codebook to the second device based on the most similar codebook.

Step S508: Target channel information is represented by a weighted sum of a plurality of codebooks in the codebook set.

Step S509: Feed back indexes and corresponding weighted values of the plurality of codebooks to the second device.

Thus, embodiments of this application provide a method for feeding back channel information of a delay-Doppler domain. A first device uses all channel information of a delay-Doppler domain obtained by estimation as target channel information, obtains target feedback information through direct quantization or based on a codebook set, and sends the target feedback information to a second device. Therefore, the channel information of the delay-Doppler domain may be accurately sent, and balance between feedback overhead and feedback accuracy may be achieved based on the methods of determining the target channel information and the target feedback information.

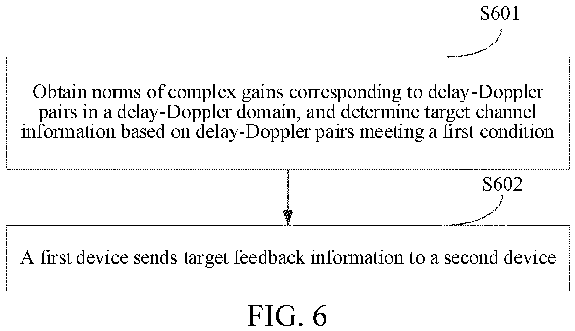

FIG. 6 is a schematic flowchart of another method for feeding back channel information of a delay-Doppler domain according to embodiments of this application. As shown in FIG. 6, the method is executed by a first device, which may be a terminal or a network side device. In other words, the method may be executed by software or hardware installed on a terminal or a network side device. The method may include the following steps.

Step S601: Obtain norms of complex gains corresponding to delay-Doppler pairs in a delay-Doppler domain, and determine target channel information based on delay-Doppler pairs meeting a first condition.

The delay-Doppler pairs meeting the first condition include at least one of the following:
delay-Doppler pairs having norms greater than a threshold α; and
a first quantity F of delay-Doppler pairs having largest norms.

There are many methods for calculating the norms of the complex gains. In one implementation, the norms are modulus values of the complex gains or target powers of modulus values of the complex gains.

In one implementation, floating point number precision of each norm is determined by a third parameter, and the third parameter is determined in at least one of the following ways:
determining by a protocol; and
determining by first signaling exchanged between the first device and a second device.

In embodiments of this application, after obtaining channel information of the delay-Doppler domain through channel estimation, the first device selects part of the channel information for feedback.

In one implementation, the first device selects delay-Doppler pairs having norms greater than a threshold α based on the norms of the complex gains of the delay-Doppler pairs. For example, taking the delay-Doppler domain shown in FIG. 3 as an example, norms of complex gains of delay-Doppler pairs are obtained separately. The magnitude of the norms may be indicated by density of points in the grid cells in FIG. 3. Higher density indicates larger norms. Specifically, when α = 0.7, coordinates of selected delay-Doppler pairs are [-2,4], [0,7], and [3,2], and norms of corresponding complex gains are respectively 0.7262, 0.9084, and 0.7838;and when α = 0.4, coordinates of selected delay-Doppler pairs are [-2,4], [0,7], [3,2], [-1,3], and [3,6], and norms of corresponding complex gains are respectively 0.7262, 0.9084, 0.7838, 0.4132, and 0.5209.

It should be understood that feedback overhead and feedback accuracy may be balanced by adjusting the threshold α. For a same transmission environment and feedback mechanism, larger α indicates smaller feedback overhead and lower feedback accuracy.

In another implementation, the first device selects the first F delay-Doppler pairs having largest norms based on the norms of the complex gains of the delay-Doppler pairs. For example, taking the delay-Doppler domain shown in FIG. 3 as an example, when F = 4, coordinates of selected delay-Doppler pairs are [0,7], [3,2], [-2,4], and [3,6], and norms of corresponding gains are respectively 0.9084, 0.7838, 0.7262, and 0.5209; and when F= 7, coordinates of selected delay-Doppler pairs are [0,7], [3,2], [-2,4], [3,6], [-1,3], [-4,5] and [-3,7], and norms of corresponding gains are respectively 0.9084, 0.7838, 0.7262, 0.5209, 0.4132, 0.3333, and 0.2989.

It should be understood that feedback overhead and feedback accuracy may be balanced by adjusting the value of the first quantity F. For a same transmission environment and feedback mechanism, larger F indicates smaller feedback overhead and lower feedback accuracy.

It should be understood that the first device and the second device necessarily perform information feedback and recovery based on the same threshold α or first quantity F. In one implementation, the threshold α and the first quantity F are determined in at least one of the following ways:
determining by a protocol; and
determining by first signaling exchanged between the first device and the second device.

The target channel information determined by the first device based on the selected delay-Doppler pairs includes at least one of the following:
position information of the delay-Doppler pairs meeting the first condition in the delay-Doppler domain; and
the complex gains corresponding to the delay-Doppler pairs meeting the first condition.

In one implementation, both the position information and the complex gain of the selected delay-Doppler pairs may be used as the target channel information.

In another implementation, the position information of the selected delay-Doppler pairs may be solely used as the target channel information.

Step S602: The first device sends target feedback information to the second device.

The target feedback information is associated with the target channel information, the target channel information is all or part of channel information of the delay-Doppler domain obtained by the first device performing channel estimation on a target signal, and the target signal is a signal sent by the second device or a third device to the first device.

Before step S602, there are many feedback approaches for the first device to determine the target feedback information to be sent to the second device based on the target channel information. In one implementation, the first device directly quantizes the target channel information as the target feedback information.

In a case that the target channel information includes the position information and the complex gains of the selected delay-Doppler pairs, the first device directly quantizes both the position information and the complex gains of the selected delay-Doppler pairs as the target feedback information. In a case that the target channel information only includes the position information of the selected delay-Doppler pairs, the first device directly quantizes the position information of the selected delay-Doppler pairs as the target feedback information.

In one implementation, floating point number precision of the complex gain corresponding to each delay-Doppler pair in the target feedback information is determined by a second parameter. The second parameter is determined in at least one of the following ways:
determining by a protocol; and
determining by first signaling exchanged between the first device and the second device.

In another implementation, according to the target channel information, the first device determines the target feedback information based on a target codebook selected from a codebook set, specific as follows.

In one implementation, the first device may select a codebook most similar to the target channel information from the codebook set, and determine the target feedback information based on the most similar codebook. The target feedback information may be an index of the most similar codebook, and the first device sends the index of the most similar codebook to the second device. The second device searches for the corresponding codebook from the codebook set based on the received index, and then recovers the target channel information based on the found codebook. In other words, the found codebook may be directly used as the target channel information, to recover the channel information of the delay-Doppler domain.

In another implementation, in a case that the target channel information is represented by a weighted sum of a plurality of codebooks in the codebook set, the target feedback information is determined based on the weighted sum of the plurality of codebooks. The first device selects a plurality of codebooks from the codebook set, and represents the target channel information as a weighted sum of the plurality of codebooks. In one implementation, the first device may use an index and a corresponding weighted value of each of the plurality of codebooks as the target feedback information based on the weighted sum of the plurality of codebooks, and send the indexes of the plurality of codebooks and the weighted values corresponding to the codebooks to the second device. The second device searches for the plurality of corresponding codebooks from the codebook set based on the received indexes, then recovers the target channel information based on the weighted values corresponding to the codebooks, and then obtains the channel information of the delay-Doppler domain.

In one implementation, floating point number precision of the weighted value is determined by a fourth parameter, and the fourth parameter is determined in at least one of the following ways:
determining by a protocol; and
determining by first signaling exchanged between the first device and the second device.

Further, in a case that according to the target channel information, the target feedback information is determined for feedback based on the target codebook selected from the codebook set, the target codebook may include at least one of the following:
a first codebook obtained based on delay values and Doppler values corresponding to the delay-Doppler pairs in the target channel information, where to be specific, each first codebook is used for indicating a combination of position information of a group of delay-Doppler pairs;
a second codebook obtained based on the complex gains corresponding to the delay-Doppler pairs in the target channel information, where to be specific, each second codebook is used for indicating a combination of the complex gains of a group of delay-Doppler pairs; and
a third codebook obtained based on the delay values and Doppler values corresponding to the delay-Doppler pairs in the target channel information and the complex gains corresponding to the delay-Doppler pairs, where to be specific, each third codebook is used for indicating a combination of the position information and corresponding complex gains of a group of delay-Doppler pairs.

It should be understood that in a case that the target channel information only includes the position information of the delay-Doppler pairs, a first codebook may be selected from the codebook set as the target codebook, and then the target feedback information is determined based on the selected first codebook. In a case that it is determined that the target channel information includes the position information and the complex gains of the delay-Doppler pairs, a first codebook and a second codebook may be respectively selected from the two codebook sets as target codebooks, and the target feedback information is determined based on the selected first codebook and second codebook; or a third codebook is selected from the codebook set as the target codebook, and the target feedback information is determined based on the selected third codebook.

In one implementation, the first signaling exchanged between the first device and the second device includes at least one of the following:
radio resource control signaling;
layer 1 signaling of a physical downlink control channel;
information of a physical downlink shared channel;
signaling of a medium access control control element;
a system information block;
layer 1 signaling of a physical uplink control channel;
MSG 1 information of a physical random access channel;
MSG 3 information of the physical random access channel;
MSG A information of the physical random access channel;
information of a physical uplink shared channel;
Xn interface signaling;
PC5 interface signaling; and
sidelink interface signaling.

In one implementation, the first device may adaptively adjust at least one of the following parameters based on a transmission environment condition and a transmission requirement:
the threshold, the first quantity, a first parameter, the second parameter, the third parameter, and the fourth parameter.

A process of the adaptive adjustment is triggered by the first device or the second device. A process of the adaptive adjustment is triggered by the first device or the second device.

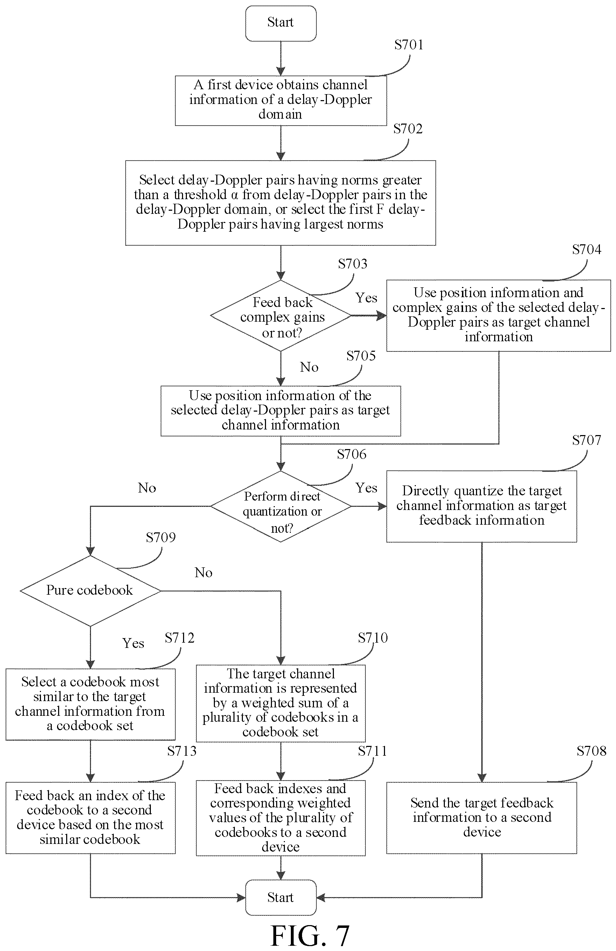

In one implementation, FIG. 7 is a schematic flowchart of another method for feeding back channel information of a delay-Doppler domain according to embodiments of this application. As shown in FIG. 7, the method includes the following steps.

Step S701: A first device obtains channel information of a delay-Doppler domain.

Step S702: Select delay-Doppler pairs having norms greater than a threshold α from delay-Doppler pairs in the delay-Doppler domain, or select the first F delay-Doppler pairs having largest norms.

Step S703: Determine whether to feed back complex gains in feedback information to a second device; if yes, perform step S704; or if not, perform step S705.

Step S704: Use position information and complex gains of the selected delay-Doppler pairs as target channel information.

S705: Use position information of the selected delay-Doppler pairs as target channel information.

Step S706: Determine whether to directly quantize the channel information of the delay-Doppler domain; if yes, perform Step S707; or if not, perform Step S709 based on a codebook set.

Step S707: Directly quantize the target channel information as target feedback information.

Step S708: Send the target feedback information to the second device.

Step S709: Determine whether to use a pure codebook approach; if yes, perform S710; or if not, perform S712.

Step S710: Select a codebook most similar to the target channel information from the codebook set.

Step S711: Feed back an index of the codebook to the second device based on the most similar codebook.

Step S712: The target channel information is represented by a weighted sum of a plurality of codebooks in the codebook set.

Step S713: Feed back an index of the codebook to the second device based on the most similar codebook.

Thus, embodiments of this application provide a method for feeding back channel information of a delay-Doppler domain. A first device obtains norms of complex gains of delay-Doppler pairs, obtains target channel information based on delay-Doppler pairs having norms greater than a threshold or a first quantity of delay-Doppler pairs having largest norms, then obtains target feedback information through direct quantization or based on a codebook set, and sends the target feedback information to a second device. Therefore, the channel information of the delay-Doppler domain may be accurately sent, and balance between feedback overhead and feedback accuracy may be achieved based on the methods of determining the target channel information and the target feedback information.

Based on the above embodiments, further, after the first device performs channel estimation, the method further includes:
the first device obtains a first parameter based on a channel estimation result of the delay-Doppler domain or a vectorized equivalent channel matrix estimation result of the delay-Doppler domain, and feeds back the first parameter to the second device.

The first parameter includes at least one of the following:
a channel quality indicator (Channel quality indicator, CQI);
a precoding matrix indicator (Precoding matrix indicator, PMI);
a rank indicator (Rank indicator, RI);
a CSI-RS resource indicator (CSI-RS Resource Indicator, CRI);
a synchronization signal and PBCH block resource indicator (Synchronization Signal and PBCH block Resource Indicator, SSBRI);
a layer indicator (Layer Indicator, LI); and
an L1 reference signal received power (L 1 Reference Signal Received Power, L 1-RSRP).

Thus, embodiments of this application provide a method for feeding back channel information of a delay-Doppler domain. A first device obtains a first parameter based on a channel estimation result of a delay-Doppler domain or a vectorized equivalent channel matrix estimation result of the delay-Doppler domain, and feeds back the first parameter to a second device. Therefore, channel information of the delay-Doppler domain may be accurately sent, and balance between feedback overhead and feedback accuracy may be achieved based on the methods of determining target channel information and target feedback information.

It should be noted that the method for feeding back channel information of a delay-Doppler domain according to embodiments of this application may be executed by an apparatus for feeding back channel information of a delay-Doppler domain, or a control module configured to execute a method for feeding back channel information of a delay-Doppler domain in the apparatus for feeding back channel information of a delay-Doppler domain. In embodiments of this application, taking the apparatus for feeding back channel information of a delay-Doppler domain executing the method for feeding back channel information of a delay-Doppler domain as an example, the apparatus for feeding back channel information of a delay-Doppler domain according to embodiments of the present application is described.

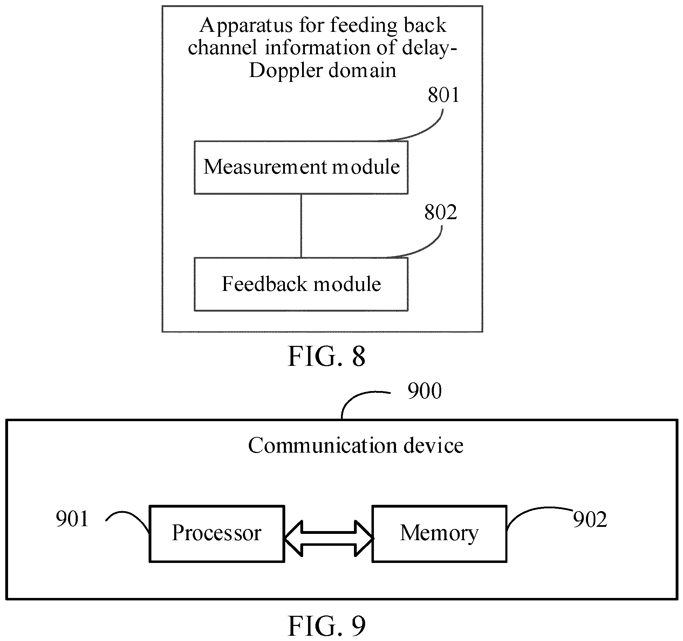

FIG. 8 is a schematic structural diagram of an apparatus for feeding back channel information of a delay-Doppler domain according to embodiments of this application. As shown in FIG. 8, the apparatus includes a measurement module 801 and a feedback module 802.

The measurement module 801 is configured to perform channel estimation on a target signal to obtain target channel information of a delay-Doppler domain. The feedback module 802 is configured to send target feedback information to a second device.

The target feedback information is associated with the target channel information, and the target signal is a signal sent by the second device or a third device to a first device.

Thus, embodiments of this application provide an apparatus for feeding back channel information of a delay-Doppler domain. Target feedback information is sent to a second device, where the target feedback information is associated with target channel information, the target channel information is all or part of channel information of a delay-Doppler domain obtained by a first device performing channel estimation on a target signal, and the target signal is a signal sent by the second device or a third device to the first device. Therefore, the channel information of the delay-Doppler domain may be accurately sent, and balance between feedback overhead and feedback accuracy may be achieved based on the methods of determining the target channel information and the target feedback information.

Based on the above embodiments, further, the target channel information includes all delay-Doppler pairs in the delay-Doppler domain, and complex gains corresponding to the delay-Doppler pairs, and each delay-Doppler pair is determined by a pair of delay value and Doppler value, and is used for indicating a region indicated by the pair of delay value and Doppler value in the delay-Doppler domain.

Further, the feedback module is further configured to perform at least one of the following:
directly quantizing the target channel information as the target feedback information; and
according to the target channel information, determining the target feedback information based on a target codebook selected from a codebook set.

Further, in a case of directly quantizing the target channel information, floating point number precision of a complex gain corresponding to each delay-Doppler pair in the target feedback information is determined by a second parameter, and the second parameter is determined in at least one of the following ways:
determining by a protocol; and
determining by first signaling exchanged between the apparatus and the second device.

Further, the according to the target channel information, determining the target feedback information based on a target codebook selected from a codebook set includes at least one of the following:
selecting a codebook most similar to the target channel information from the codebook set, and determining the target feedback information based on the most similar codebook; and
in a case that the target channel information is represented by a weighted sum of a plurality of codebooks in the codebook set, determining the target feedback information based on the weighted sum of the plurality of codebooks.

Further, the determining the target feedback information based on the weighted sum of the plurality of codebooks includes:
using an index and a corresponding weighted value of each of the plurality of codebooks as the target feedback information based on the weighted sum of the plurality of codebooks.

The according to the target channel information and based on a target codebook selected from a codebook set includes at least one of the following:
a first codebook obtained based on the delay values and the Doppler values corresponding to the delay-Doppler pairs in the target channel information;
a second codebook obtained based on complex gains corresponding to the delay-Doppler pairs in the target channel information; and
a third codebook obtained based on the delay values and Doppler values corresponding to the delay-Doppler pairs in the target channel information and the complex gains corresponding to the delay-Doppler pairs.

Further, floating point number precision of the weighted value is determined by a fourth parameter, and the fourth parameter is determined in at least one of the following ways:
determining by a protocol; and
determining by first signaling exchanged between the apparatus and the second device.

Further, the first signaling includes at least one of the following:
radio resource control signaling;
layer 1 signaling of a physical downlink control channel;
information of a physical downlink shared channel;
signaling of a medium access control control element;
a system information block;
layer 1 signaling of a physical uplink control channel;
MSG 1 information of a physical random access channel;
MSG 3 information of the physical random access channel;
MSG A information of the physical random access channel;
information of a physical uplink shared channel;
Xn interface signaling;
PC5 interface signaling; and
sidelink interface signaling.

Thus, embodiments of this application provide an apparatus for feeding back channel information of a delay-Doppler domain. All channel information of a delay-Doppler domain obtained by estimation is used as target channel information, and target feedback information is obtained through direct quantization or based on a codebook set, and sent to a second device. Therefore, the channel information of the delay-Doppler domain may be accurately sent, and balance between feedback overhead and feedback accuracy may be achieved based on the methods of determining the target channel information and the target feedback information.

Based on the above embodiments, further, the measurement module is configured to obtain norms of complex gains corresponding to delay-Doppler pairs in the delay-Doppler domain, and determine the target channel information based on delay-Doppler pairs meeting a first condition.

The delay-Doppler pairs meeting the first condition include at least one of the following:
delay-Doppler pairs having norms greater than a threshold; and
a first quantity of delay-Doppler pairs having largest norms.

Further, the norms are modulus values of the complex gains or target powers of modulus values of the complex gains.

Further, floating point number precision of each norm is determined by a third parameter, and the third parameter is determined in at least one of the following ways:
determining by a protocol; and
determining by first signaling exchanged between the apparatus and the second device.

Further, the threshold and the first quantity are determined in at least one of the following ways:
determining by a protocol; and
determining by first signaling exchanged between the apparatus and the second device.

Further, the target channel information includes at least one of the following:
position information of the delay-Doppler pairs meeting the first condition in the delay-Doppler domain; and
the complex gains corresponding to the delay-Doppler pairs meeting the first condition.

Further, the measurement module is further configured to adaptively adjust at least one of the following parameters based on a transmission environment condition and a transmission requirement:
the threshold, the first quantity, a first parameter, the second parameter, the third parameter, and the fourth parameter.

A process of the adaptive adjustment is triggered by the first device or the second device.

Thus, embodiments of this application provide an apparatus for feeding back channel information of a delay-Doppler domain. Norms of complex gains of delay-Doppler pairs are obtained, target channel information is obtained based on delay-Doppler pairs having norms greater than a threshold or a first quantity of delay-Doppler pairs having largest norms, and then target feedback information is obtained through direct quantization or based on a codebook set, and sent to a second device. Therefore, the channel information of the delay-Doppler domain may be accurately sent, and balance between feedback overhead and feedback accuracy may be achieved based on the methods of determining the target channel information and the target feedback information.

Based on the above embodiments, further, the feedback module is configured to obtain a first parameter based on a channel estimation result of the delay-Doppler domain or a vectorized equivalent channel matrix estimation result of the delay-Doppler domain, and feed back the first parameter to the second device.

The first parameter includes at least one of the following:
a channel quality indicator;
a precoding matrix indicator;
a rank indicator;
a channel state information resource indicator;
a synchronization signal and PBCH block resource indicator;
a layer indicator; and
an L 1 reference signal received power.

Thus, embodiments of this application provide an apparatus for feeding back channel information of a delay-Doppler domain. A first parameter is obtained based on a channel estimation result of a delay-Doppler domain or a vectorized equivalent channel matrix estimation result of the delay-Doppler domain, and the first parameter is fed back to a second device. Therefore, channel information of the delay-Doppler domain may be accurately sent, and balance between feedback overhead and feedback accuracy may be achieved based on the methods of determining target channel information and target feedback information.

The apparatus for feeding back channel information of a delay-Doppler domain in embodiments of this application may be an apparatus, an apparatus or electronic device having an operating system, or a component, an integrated circuit, or a chip in a terminal. The apparatus or electronic device may be a mobile terminal or a non-mobile terminal. Exemplarily, the mobile terminal may include but not limited to the types of terminals 11 listed above, and the non-mobile terminal may be a server, a network attached storage (Network Attached Storage, NAS), a personal computer (personal computer, PC), a television (television, TV), an automated teller machine, a self-service machine, or the like, which are not specifically limited in embodiments of this application.

The apparatus for feeding back channel information of a delay-Doppler domain according to embodiments of this application can implement all processes implemented by the method embodiments shown in FIG. 2 to FIG. 7, and the same technical effect can be achieved. To avoid repetition, details are not described here again.

Optionally, as shown in FIG. 9, embodiments of this application further provide a communication device 900, including a processor 901, a memory 902, and a program or instructions stored in the memory 902 and runnable on the processor 901. For example, in a case that the communication device 900 is a terminal, when the program or the instructions is/are executed by the processor 901, processes of the embodiments of the method for feeding back channel information of a delay-Doppler domain are implemented, and the same technical effect can be achieved. In a case that the communication device 900 is a network side device, when the program or the instructions is/are executed by the processor 901, processes of the embodiments of the method for feeding back channel information of a delay-Doppler domain are implemented, and the same technical effect can be achieved. To avoid repetition, details are not described here again.

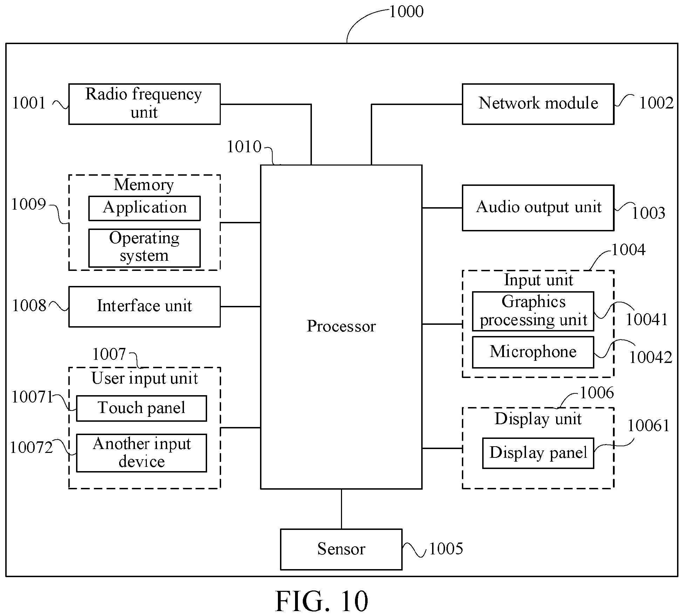

Embodiments of this application further provide a terminal, including a processor and a communication interface. The processor is configured to perform channel estimation on a target signal to obtain target channel information of a delay-Doppler domain, and the communication interface is configured to send target feedback information to a second device. The terminal embodiment corresponds to the above-mentioned terminal-side method embodiments, and implementation processes and implementation modes of the above-mentioned method embodiments may be applied to the terminal embodiment, and the same technical effect can be achieved. Specifically, FIG. 10 is a schematic diagram of a hardware structure of a terminal implementing embodiments of this application.

The terminal 1000 includes but is not limited to: at least some components in a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (such as a battery) for supplying power to the components. The power supply may be logically connected to the processor 1010 by a power management system, thereby implementing functions such as charging, discharging, and power consumption management by using the power management system. The terminal structure shown in FIG. 10 does not constitute a limitation on the terminal, and the terminal may include more or fewer components than shown, or combine some components, or have different component arrangements, which are not described herein in detail.

It should be understood that in embodiments of this application, the input unit 1004 may include a graphics processing unit (Graphics Processing Unit, GPU) 10041 and a microphone 10042. The graphics processing unit 10041 performs processing on image data of a static picture or a video that is obtained by an image acquisition apparatus (for example, a camera) in a video acquisition mode or an image acquisition mode. The display unit 1006 may include a display panel 10061. The display panel 10061 may be configured in the form of a liquid crystal display, an organic light-emitting diode, or the like. The user input unit 1007 includes a touch panel 10071 and another input device 10072. The touch panel 10071 is also referred to as a touch screen. The touch panel 10071 may include two parts: a touch detection apparatus and a touch controller. The another input device 10072 may include, but not limited to, a physical keyboard, a functional key (such as a volume control key or a switch key), a track ball, a mouse, and a joystick, which are not described herein in detail.

In embodiments of this application, the radio frequency unit 1001 receives downlink data from a network side device, and then the downlink data is processed by the processor 1010. In addition, uplink data is sent to the network side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or instructions, and various data. The memory 1009 may mainly include a program or instruction storage area and a data storage area. The program or instruction storage area may store an operating system, an application program or instructions required by at least one function (such as a sound playback function and an image display function), and the like. In addition, the memory 1009 may include a high-speed random access memory, or may include a non-transitory memory. The non-transitory memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory, for example, at least one disk storage device, a flash memory device, or another non-transitory solid state storage device.

The processor 1010 may include one or more processing units. Optionally, the processor 1010 may integrate an application processor and a modem processor. The application processor mainly processes an operating system, a user interface, an application program or instructions, and the like. The modem processor mainly processes wireless communications, such as a baseband processor. It may be understood that the modem processor may not be integrated into the processor 1010.

The radio frequency unit 1001 is configured to send target feedback information to a second device.

The target feedback information is associated with the target channel information, and the target signal is a signal sent by the second device or a third device to a first device.

The processor 1010 is configured to perform channel estimation on the target signal to obtain the target channel information of the delay-Doppler domain.

According to embodiments of this application, the channel information of the delay-Doppler domain may be accurately sent, and balance between feedback overhead and feedback accuracy can be achieved based on the methods of determining the target channel information and the target feedback information.

Optionally, the target channel information includes all delay-Doppler pairs in the delay-Doppler domain, and complex gains corresponding to the delay-Doppler pairs, and each delay-Doppler pair is determined by a pair of delay value and Doppler value, and is used for indicating a region indicated by the pair of delay value and Doppler value in the delay-Doppler domain.

Further, the radio frequency unit 1001 is further configured to perform at least one of the following:
directly quantizing the target channel information as the target feedback information; and
according to the target channel information, determining the target feedback information based on a target codebook selected from a codebook set.

Further, in a case of directly quantizing the target channel information, floating point number precision of a complex gain corresponding to each delay-Doppler pair in the target feedback information is determined by a second parameter, and the second parameter is determined in at least one of the following ways:
determining by a protocol; and
determining by first signaling exchanged between the apparatus and the second device.

Further, the according to the target channel information, determining the target feedback information based on a target codebook selected from a codebook set includes at least one of the following:
selecting a codebook most similar to the target channel information from the codebook set, and determining the target feedback information based on the most similar codebook; and
in a case that the target channel information is represented by a weighted sum of a plurality of codebooks in the codebook set, determining the target feedback information based on the weighted sum of the plurality of codebooks.

Further, the determining the target feedback information based on the weighted sum of the plurality of codebooks includes:
using an index and a corresponding weighted value of each of the plurality of codebooks as the target feedback information based on the weighted sum of the plurality of codebooks.

The according to the target channel information and based on a target codebook selected from a codebook set includes at least one of the following:
a first codebook obtained based on the delay values and the Doppler values corresponding to the delay-Doppler pairs in the target channel information;
a second codebook obtained based on complex gains corresponding to the delay-Doppler pairs in the target channel information; and
a third codebook obtained based on the delay values and Doppler values corresponding to the delay-Doppler pairs in the target channel information and the complex gains corresponding to the delay-Doppler pairs.

Further, floating point number precision of the weighted value is determined by a fourth parameter, and the fourth parameter is determined in at least one of the following ways:
determining by a protocol; and
determining by first signaling exchanged between the apparatus and the second device.

Further, the first signaling includes at least one of the following:
radio resource control signaling;
layer 1 signaling of a physical downlink control channel;
information of a physical downlink shared channel;
signaling of a medium access control control element;
a system information block;
layer 1 signaling of a physical uplink control channel;
MSG 1 information of a physical random access channel;
MSG 3 information of the physical random access channel;
MSG A information of the physical random access channel;
information of a physical uplink shared channel;
Xn interface signaling;
PC5 interface signaling; and
sidelink interface signaling.

According to embodiments of this application, the channel information of the delay-Doppler domain may be accurately sent, and balance between feedback overhead and feedback accuracy can be achieved based on the methods of determining the target channel information and the target feedback information.

Further, the processor 1010 is further configured to obtain norms of the complex gains corresponding to the delay-Doppler pairs in the delay-Doppler domain, and determine the target channel information based on delay-Doppler pairs meeting a first condition.

The delay-Doppler pairs meeting the first condition include at least one of the following:
delay-Doppler pairs having norms greater than a threshold; and
a first quantity of delay-Doppler pairs having largest norms.

Further, the norms are modulus values of the complex gains or target powers of modulus values of the complex gains.

Further, floating point number precision of each norm is determined by a third parameter, and the third parameter is determined in at least one of the following ways:
determining by a protocol; and
determining by first signaling exchanged between the apparatus and the second device.

Further, the threshold and the first quantity are determined in at least one of the following ways:
determining by a protocol; and
determining by first signaling exchanged between the apparatus and the second device.

Further, the target channel information includes at least one of the following:
position information of the delay-Doppler pairs meeting the first condition in the delay-Doppler domain; and
the complex gains corresponding to the delay-Doppler pairs meeting the first condition.

Further, the measurement module is further configured to adaptively adjust at least one of the following parameters based on a transmission environment condition and a transmission requirement:
the threshold, the first quantity, a first parameter, the second parameter, the third parameter, and the fourth parameter.

A process of the adaptive adjustment is triggered by the first device or the second device.

According to embodiments of this application, the channel information of the delay-Doppler domain may be accurately sent, and balance between feedback overhead and feedback accuracy can be achieved based on the methods of determining the target channel information and the target feedback information.

Further, the processor 1010 is further configured to obtain a first parameter based on a channel estimation result of the delay-Doppler domain or a vectorized equivalent channel matrix estimation result of the delay-Doppler domain, and feed back the first parameter to the second device.

The first parameter includes at least one of the following:
a channel quality indicator;
a precoding matrix indicator;
a rank indicator;
a channel state information resource indicator;
a synchronization signal and PBCH block resource indicator;
a layer indicator; and
an L1 reference signal received power.

According to embodiments of this application, the channel information of the delay-Doppler domain may be accurately sent, and balance between feedback overhead and feedback accuracy can be achieved based on the methods of determining the target channel information and the target feedback information.

Embodiments of this application further provide a network side device, including a processor and a communication interface. The processor is configured to perform channel estimation on a target signal to obtain target channel information of a delay-Doppler domain, and the communication interface is configured to send target feedback information to a second device. The network side device embodiment corresponds to the above-mentioned network side device method embodiments, and implementation processes and implementation modes of the above-mentioned method embodiments may be applied to the network side device embodiment, and the same technical effect can be achieved.

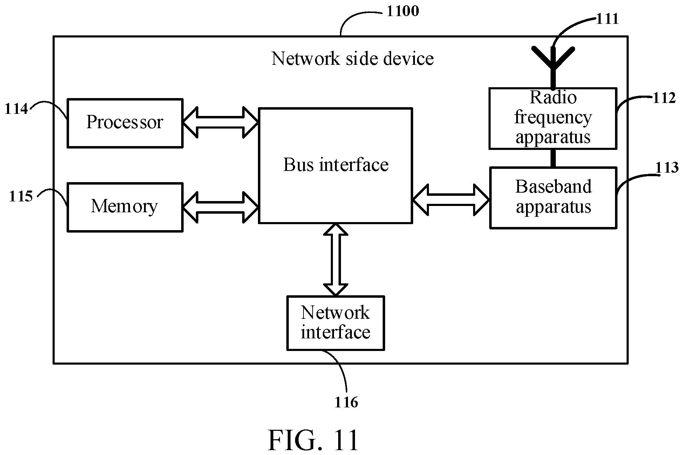

Specifically, Embodiments of this application further provide a network side device. As shown in FIG. 11, the network device 1100 includes an antenna 111, a radio frequency apparatus 112, and a baseband apparatus 113. The antenna 111 is connected to the radio frequency apparatus 112. In an uplink direction, the radio frequency apparatus 112 receives information through the antenna 111, and sends the received information to the baseband apparatus 113 for processing. In a downlink direction, the baseband apparatus 113 processes information to be sent and sends same to the radio frequency apparatus 112, and the radio frequency apparatus 112 processes the received information and sends same out through the antenna 111.

A frequency band processing apparatus may be located in the baseband apparatus 113. The method performed by the network side device in the above embodiments may be implemented in the baseband apparatus 113. The baseband apparatus 113 includes a processor 114 and a memory 115.

The baseband apparatus 113 may include, for example, at least one baseband board, and a plurality of chips are provided on the baseband board. As shown in FIG. 11, one of the chips is, for example, a processor 114, which is connected to a memory 115 to call a program in the memory 115 to execute operations of the network device shown in the above method embodiments.

The baseband apparatus 113 may further include a network interface 116 configured to exchange information with the radio frequency apparatus 112. The interface is, for example, a common public radio interface (common public radio interface, CPRIfor short).

Specifically, the network side device according to embodiments of this application further includes instructions or a program stored on the memory 115 and runnable on the processor 114. The processor 114 calls the instructions or program in the memory 115 to execute the method performed by the modules shown in FIG. 6, and the same technical effect can be achieved. To avoid repetition, details are not described here again.

Embodiments of this application further provide a readable storage medium. The readable storage medium stores a program or instructions. When the program or instructions is/are executed by a processor, processes of the embodiments of the method for feeding back channel information of a delay-Doppler domain are implemented, and the same technical effect can be achieved. To avoid repetition, details are not described here again.

The processor is the processor in the terminal described in the foregoing embodiments. The readable storage medium includes a computer-readable storage medium, such as a computer read-only memory (Read-Only Memory, ROM), a random access memory (Random Access Memory, RAM), a floppy disk, or an optical disc.

Embodiments of this application further provide a chip. The chip includes a processor and a communication interface. The communication interface is coupled to the processor. The processor is configured to run a program or instructions to implement processes of the embodiments of the method for feeding back channel information of a delay-Doppler domain, and the same technical effect can be achieved. To avoid repetition, details are not described here again.

It should be understood that the chip according to the embodiments of this application may also be referred to as a system on chip, a system-on-chip, a system on a chip, or a system-on-a-chip.

It should be noted that the terms "include", "comprise", or any other variation thereof in this specification are intended to cover a non-exclusive inclusion, such that a process, method, article, or apparatus that includes a list of elements does not include only those elements but may include other elements not expressly listed or inherent to such process, method, article, or apparatus. Without more limitations, an element defined by the sentence "including one" does not preclude the existence of additional identical elements in a process, method, article, or apparatus that includes the element. In addition, it should be pointed out that the scope of the method and apparatus in the implementations of this application is not limited to performing the functions in the order shown or discussed, but may also include performing the functions in a substantially simultaneous manner or in the reverse order depending on the functions involved, for example, the method described may be performed in an order different from that described, and various steps may also be added, omitted, or combined. In addition, features described with reference to some examples may be combined in other examples.

By means of the descriptions in the foregoing implementations, a person skilled in the art may clearly learn that the method according to the foregoing embodiments may be implemented by software and a necessary general-purpose hardware platform, and may also be implemented by hardware, but in many cases, the former is a better implementation. Based on such an understanding, the technical solutions of this application or a part thereof contributing to conventional technologies may be essentially embodied in the form of a computer software product. The computer software product is stored in a storage medium (such as a ROM/RAM, a floppy disk, or an optical disc) and includes several instructions so that a terminal (which may be a mobile phone, a computer, a server, an air conditioner, a network device, and the like) implements the method according to the embodiments of this application.

The embodiments of this application are described above with reference to the accompanying drawings, but this application is not limited to the foregoing detailed implementations. The foregoing detailed implementations are only schematic but not restrictive. Under the motivation of this application, a person skilled in the art may make many forms without departing from the purpose of this application and the scope of protection of the claims, and these all fall within the scope of protection of this application.

## Claims

1. A method for feeding back channel information of a delay-Doppler domain, comprising:
sending, by a first device, target feedback information to a second device, wherein
the target feedback information is associated with target channel information, the target channel information is all or part of channel information of a delay-Doppler domain obtained by the first device performing channel estimation on a target signal, and the target signal is a signal sent by the second device or a third device to the first device.

2. The method according to claim 1, wherein the target channel information comprises all delay-Doppler pairs in the delay-Doppler domain, and complex gains corresponding to the delay-Doppler pairs, and each delay-Doppler pair is determined by a pair of delay value and Doppler value, and is used for indicating a region indicated by the pair of delay value and Doppler value in the delay-Doppler domain.

3. The method according to claim 1, further comprising:
obtaining norms of complex gains corresponding to delay-Doppler pairs in the delay-Doppler domain, and determining the target channel information based on delay-Doppler pairs meeting a first condition, wherein
the delay-Doppler pairs meeting the first condition comprise at least one of the following:
delay-Doppler pairs having norms greater than a threshold; and
a first quantity of delay-Doppler pairs having largest norms.

4. The method according to claim 3, wherein the norms are modulus values of the complex gains or target powers of modulus values of the complex gains.

5. The method according to claim 3, wherein the target channel information comprises at least one of the following:
position information of the delay-Doppler pairs meeting the first condition in the delay-Doppler domain; and
the complex gains corresponding to the delay-Doppler pairs meeting the first condition.

6. The method according to claim 1, wherein before the sending, by a first device, target feedback information to a second device, the method further comprises at least one of the following:
directly quantizing the target channel information as the target feedback information; and
according to the target channel information, determining the target feedback information based on a target codebook selected from a codebook set.

7. The method according to claim 6, wherein the according to the target channel information, determining the target feedback information based on a target codebook selected from a codebook set comprises at least one of the following:
selecting a codebook most similar to the target channel information from the codebook set, and determining the target feedback information based on the most similar codebook; and
in a case that the target channel information is represented by a weighted sum of a plurality of codebooks in the codebook set, determining the target feedback information based on the weighted sum of the plurality of codebooks.

8. The method according to claim 7, wherein the determining the target feedback information based on the weighted sum of the plurality of codebooks comprises:
using an index and a corresponding weighted value of each of the plurality of codebooks as the target feedback information based on the weighted sum of the plurality of codebooks.

9. The method according to claim 6, wherein the according to the target channel information and based on a target codebook selected from a codebook set comprises at least one of the following:
a first codebook obtained based on delay values and Doppler values corresponding to delay-Doppler pairs in the target channel information;
a second codebook obtained based on complex gains corresponding to the delay-Doppler pairs in the target channel information; and
a third codebook obtained based on the delay values and Doppler values corresponding to the delay-Doppler pairs in the target channel information and the complex gains corresponding to the delay-Doppler pairs.

10. The method according to claim 1, further comprising:
obtaining, by the first device, a first parameter based on a channel estimation result of the delay-Doppler domain or a vectorized equivalent channel matrix estimation result of the delay-Doppler domain, and feeding back the first parameter to the second device, wherein
the first parameter comprises at least one of the following:
a channel quality indicator;
a precoding matrix indicator;
a rank indicator;
a channel state information resource indicator;
a synchronization signal and PBCH block resource indicator;
a layer indicator; and
an L 1 reference signal received power.

11. The method according to claim 6, wherein in a case of directly quantizing the target channel information, floating point number precision of a complex gain corresponding to each delay-Doppler pair in the target feedback information is determined by a second parameter, and the second parameter is determined in at least one of the following ways:
determining by a protocol; and
determining by first signaling exchanged between the first device and the second device.

12. The method according to claim 3, wherein floating point number precision of each norm is determined by a third parameter, and the third parameter is determined in at least one of the following ways:
determining by a protocol; and
determining by first signaling exchanged between the first device and the second device.

13. The method according to claim 3, wherein the threshold and the first quantity are determined in at least one of the following ways:
determining by a protocol; and
determining by first signaling exchanged between the first device and the second device.

14. The method according to claim 8, wherein floating point number precision of the weighted value is determined by a fourth parameter, and the fourth parameter is determined in at least one of the following ways:
determining by a protocol; and
determining by first signaling exchanged between the first device and the second device.

15. The method according to any one of claims 11 to 14, wherein the first signaling comprises at least one of the following:
radio resource control signaling;
layer 1 signaling of a physical downlink control channel;
information of a physical downlink shared channel;
signaling of a medium access control control element;
a system information block;
layer 1 signaling of a physical uplink control channel;
MSG 1 information of a physical random access channel;
MSG 3 information of the physical random access channel;
MSG A information of the physical random access channel;
information of a physical uplink shared channel;
Xn interface signaling;
PC5 interface signaling; and
sidelink interface signaling.

16. The method according to any one of claims 11 to 14, further comprising:
adaptively adjusting at least one of the following parameters based on a transmission environment condition and a transmission requirement:
the threshold, the first quantity, a first parameter, the second parameter, the third parameter, and the fourth parameter, wherein
a process of the adaptive adjustment is triggered by the first device or the second device.

17. An apparatus for feeding back channel information of a delay-Doppler domain, comprising:
a measurement module configured to perform channel estimation on a target signal to obtain target channel information of a delay-Doppler domain; and
a feedback module configured to send target feedback information to a second device, wherein
the target feedback information is associated with the target channel information, and the target signal is a signal sent by the second device or a third device to a first device.

18. The apparatus according to claim 17, wherein the target channel information comprises all delay-Doppler pairs in the delay-Doppler domain, and complex gains corresponding to the delay-Doppler pairs, and each delay-Doppler pair is determined by a pair of delay value and Doppler value, and is used for indicating a region indicated by the pair of delay value and Doppler value in the delay-Doppler domain.

19. The apparatus according to claim 17, wherein the measurement module is configured to obtain norms of complex gains corresponding to delay-Doppler pairs in the delay-Doppler domain, and determine the target channel information based on delay-Doppler pairs meeting a first condition, wherein
the delay-Doppler pairs meeting the first condition comprise at least one of the following:
delay-Doppler pairs having norms greater than a threshold; and
a first quantity of delay-Doppler pairs having largest norms.

20. The apparatus according to claim 19, wherein the norms are modulus values of the complex gains or target powers of modulus values of the complex gains.

21. The apparatus according to claim 19, wherein the target channel information comprises at least one of the following:
position information of the delay-Doppler pairs meeting the first condition in the delay-Doppler domain; and
the complex gains corresponding to the delay-Doppler pairs meeting the first condition.

22. The apparatus according to claim 17, wherein the feedback module is further configured to perform at least one of the following:
directly quantizing the target channel information as the target feedback information; and
according to the target channel information, determining the target feedback information based on a target codebook selected from a codebook set.

23. The apparatus according to claim 22, wherein the according to the target channel information, determining the target feedback information based on a target codebook selected from a codebook set comprises at least one of the following:
selecting a codebook most similar to the target channel information from the codebook set, and determining the target feedback information based on the most similar codebook; and
in a case that the target channel information is represented by a weighted sum of a plurality of codebooks in the codebook set, determining the target feedback information based on the weighted sum of the plurality of codebooks.

24. The apparatus according to claim 23, wherein the determining the target feedback information based on the weighted sum of the plurality of codebooks comprises:
using an index and a corresponding weighted value of each of the plurality of codebooks as the target feedback information based on the weighted sum of the plurality of codebooks.

25. The apparatus according to claim 22, wherein the according to the target channel information and based on a target codebook selected from a codebook set comprises at least one of the following:
a first codebook obtained based on delay values and Doppler values corresponding to delay-Doppler pairs in the target channel information;
a second codebook obtained based on complex gains corresponding to the delay-Doppler pairs in the target channel information; and
a third codebook obtained based on the delay values and Doppler values corresponding to the delay-Doppler pairs in the target channel information and the complex gains corresponding to the delay-Doppler pairs.

26. The apparatus according to claim 17, wherein the feedback module is configured to obtain a first parameter based on a channel estimation result of the delay-Doppler domain or a vectorized equivalent channel matrix estimation result of the delay-Doppler domain, and feed back the first parameter to the second device, wherein
the first parameter comprises at least one of the following:
a channel quality indicator;
a precoding matrix indicator;
a rank indicator;
a channel state information resource indicator;
a synchronization signal and PBCH block resource indicator;
a layer indicator; and
an L1 reference signal received power.

27. The apparatus according to claim 22, wherein in a case of directly quantizing the target channel information, floating point number precision of a complex gain corresponding to each delay-Doppler pair in the target feedback information is determined by a second parameter, and the second parameter is determined in at least one of the following ways:
determining by a protocol; and
determining by first signaling exchanged between the apparatus and the second device.

28. The apparatus according to claim 19, wherein floating point number precision of each norm is determined by a third parameter, and the third parameter is determined in at least one of the following ways:
determining by a protocol; and
determining by first signaling exchanged between the apparatus and the second device.

29. The apparatus according to claim 19, wherein the threshold and the first quantity are determined in at least one of the following ways:
determining by a protocol; and
determining by first signaling exchanged between the apparatus and the second device.

30. The apparatus according to claim 24, wherein floating point number precision of the weighted value is determined by a fourth parameter, and the fourth parameter is determined in at least one of the following ways:
determining by a protocol; and
determining by first signaling exchanged between the apparatus and the second device.

31. The apparatus according to any one of claims 27 to 30, wherein the first signaling comprises at least one of the following:
radio resource control signaling;
layer 1 signaling of a physical downlink control channel;
information of a physical downlink shared channel;
signaling of a medium access control control element;
a system information block;
layer 1 signaling of a physical uplink control channel;
MSG 1 information of a physical random access channel;
MSG 3 information of the physical random access channel;
MSG A information of the physical random access channel;
information of a physical uplink shared channel;
Xn interface signaling;
PC5 interface signaling; and
sidelink interface signaling.

32. The apparatus according to any one of claims 27 to 30, wherein the measurement module is further configured to adaptively adjust at least one of the following parameters based on a transmission environment condition and a transmission requirement:
the threshold, the first quantity, a first parameter, the second parameter, the third parameter, and the fourth parameter, wherein
a process of the adaptive adjustment is triggered by the first device or the second device.

33. A terminal, comprising a processor, a memory, and a program or instructions stored in the memory and runnable on the processor, wherein when the program or the instructions is/are executed by the processor, steps of the method for feeding back channel information of a delay-Doppler domain according to any one of claims 1 to 16 are implemented.

34. A network side device, comprising a processor, a memory, and a program or instructions stored in the memory and runnable on the processor, wherein when the program or the instructions is/are executed by the processor, steps of the method for feeding back channel information of a delay-Doppler domain according to any one of claims 1 to 16 are implemented.

35. A readable storage medium, wherein the readable storage medium stores a program or instructions, and when the program or the instructions is/are executed by the processor, steps of the method for feeding back channel information of a delay-Doppler domain according to any one of claims 1 to 16 are implemented.

36. A computer program product, wherein the computer program is stored in a storage medium, and the computer program is executed by at least one processor to implement steps of the method for feeding back channel information of a delay-Doppler domain according to any one of claims 1 to 16.

37. A chip, comprising a processor and a communication interface, wherein the communication interface is coupled to the processor, and the processor is configured to run a program or instructions to implement steps of the method for feeding back channel information of a delay-Doppler domain according to any one of claims 1 to 16.

38. A communication device, configured to perform the method for feeding back channel information of a delay-Doppler domain according to any one of claims 1 to 16.
